# EUROPÄISCHE PATENTSCHRIFT

(11) **EP 3 718 445 B1**
(45) Veröffentlichungstag und Bekanntmachung des Hinweises auf die Patenterteilung: **27.10.2021**
(21) Anmeldenummer: 20162959.9
(22) Anmeldetag: 13.03.2020
(51) Int. Cl.: A47J 31/52

(54) **GETRÄNKEAUTOMAT**
DRINKS MACHINE
DISTRIBUTEUR AUTOMATIQUE DE BOISSONS

(30) Priorität: 02.04.2019 DE 102019204621
(43) Veröffentlichungstag der Anmeldung: 07.10.2020
(73) Patentinhaber: BSH Hausgeräte GmbH, 81739 München (DE)
(72) Erfinder: Daburger, Veronika, 83313 Siegsdorf (DE); Jellbauer, Florian, 83530 Schnaitsee (DE)

(56) Entgegenhaltungen:
- EP-A1- 2 441 361
- WO-A1-2015/189013
- WO-A1-2016/029294

## Beschreibung

Die vorliegende Erfindung betrifft einen Getränkeautomaten mit einer Erfassungseinrichtung. Die Erfindung betrifft außerdem ein Verfahren zum Betreiben eines solchen Getränkeautomaten.

Moderne Getränkeautomaten sind entweder ständig in Betriebsbereitschaft oder wechseln nach einer vordefinierten Nichtbenutzungsdauer in einen sogenannten Standby-Modus. Getränkeautomaten im Privatbereich, wie beispielsweise Kaffeeautomaten, werden üblicherweise nur zur Getränkezubereitung eingeschaltet und anschließend wieder ausgeschaltet. Nachteilig bei einem manuellen Ein- und Ausschalten ist jedoch, dass ein Benutzer bei einem Einschalten vergleichsweise lange warten muss, bis der Getränkeautomat, beispielsweise der Kaffeevollautomat, betriebsbereit ist. Vergisst der Benutzer darüber hinaus, den Getränkeautomaten nach der Benutzung wieder auszuschalten, so bleibt dieser unbegrenzt eingeschaltet, sofern er keinen Standby-Modus hat, wodurch unnötig viel Energie verbraucht wird. Aus der EP 2 441 361 A1 ist z. B. bekannt, dass ein Großteil des Energieverbrauchs zum Heizen von Wasser für den Getränkebezug aufgewendet wird und durch eine selbstlernende Heizungssteuerung verringert werden kann. Aus WO 2015/189013 A1 und WO 2016/029294 A1 sind Getränkeautomaten mit einem statistisch bzw. automatisch steuerbarem Betrieb bekannt.

Die vorliegende Erfindung beschäftigt sich daher mit dem Problem, einen Getränkeautomaten anzugeben, mit welchem die aus dem Stand der Technik bekannten Nachteile überwunden werden können.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen Getränkeautomaten derart auszubilden, dass er übliche Benutzungsmodi bzw. -arten erfasst, hieraus ein Benutzungsmuster ermittelt und beispielsweise ein Einschalten, ein Ausschalten oder eine Getränkevorauswahl durch ein erlerntes Benutzungsmuster auf die ermittelten Benutzermodi ausrichten kann. Der erfindungsgemäße Getränkeautomat ist somit in der Art einer selbstlernenden Einrichtung ausgebildet, die mittels einer Erfassungseinrichtung die üblicherweise benutzerbedingte Betätigung erfasst, dokumentiert und über eine entsprechende Auswerte-/Steuereinrichtung verarbeitet und mittels der erfassten Daten den Getränkeautomaten zukünftig steuert, insbesondere einschaltet, ausschaltet oder eine Getränkevorauswahl trifft. Der erfindungsgemäße Getränkeautomat bedient sich somit einer Form von künstlicher Intelligenz. Einem solchen KI-Algorithmus muss man vorteilhafter Weise gar nicht vorgeben, welche erfassten Parameter, er wie behandeln soll. Er lernt selbsttätig aus dem Benutzerverhalten, was dazu verwendet werden kann, Benutzerverhalten vorauszusagen und dieses durch eine entsprechende Vorauswahl komfortabler zu gestalten. Der erfindungsgemäße Getränkeautomat besitzt hierzu eine Erfassungseinrichtung, die eine Uhrzeit eines Einschaltens, eines Ausschaltens, eines Standby-Betriebs des Getränkeautomaten, eine Uhrzeit eines Getränkebezugs sowie eine Art eines bezogenen Getränks und/oder von Getränkeparametern erfasst und an eine damit kommunizierend verbundene Auswerte-/Steuereinrichtung übermittelt. Letztere ist dabei derart ausgebildet, dass sie die von der Erfassungseinrichtung übermittelten Daten, das heißt die Einschaltzeit, die Ausschaltzeit, den Standby-Betrieb bzw. die Art des bezogenen Getränkes und/oder die Getränkeparameter des bezogenen Getränks auswertet und daraus eine zukünftige Einschaltzeit, eine zukünftige Ausschaltzeit, eine zukünftige Standby-Zeit und/oder eine zukünftige Getränkevorauswahl und/oder zukünftige Getränkeparameter ermittelt und den Getränkeautomaten anhand dieser ermittelten zukünftigen Parameter, beispielsweise der zukünftigen Einschaltzeit, der zukünftigen Ausschaltzeit, der zukünftigen Standby-Zeit, einschaltet, ausschaltet, im Standby hält und/oder die zukünftige Getränkevorauswahl und/oder zukünftige Getränkeparameter einstellt. Dies bietet eine enorme Komfortsteigerung, da der Getränkeautomat beispielsweise erfassen kann, dass ein Benutzer sich jeden Wochentag einen Espresso zu einer bestimmten Uhrzeit, beispielsweise Werktags um 7 Uhr, samstags um 8 Uhr und sonntags um 9.30 Uhr zubereitet. Bis der erfindungsgemäße Getränkeautomat ein gewisses Benutzungsmuster ermittelt hat und darüber die zuvor genannten Parameter steuern kann, ist es selbstverständlich erforderlich, dass der Benutzer den Getränkeautomaten noch selbst einschaltet bzw. selbst sein Getränk auswählt. Nach einer gewissen Anzahl von regelmäßigen Bezügen und/oder regelmäßigen Bezugszeiten hat der Getränkeautomat dieses Benutzungsmuster jedoch erkannt/erlernt und kann sich beispielsweise kurz vor der normalen Einschaltzeit selbst einschalten und somit bereits betriebsbereit sein, wenn sich der Kunde bzw. Benutzer nähert. Näherungssensoren sind hierfür selbstverständlich nicht erforderlich.

Mit dem erfindungsgemäßen Getränkeautomaten kann auch dahingehend eine deutliche Komfortsteigerung erreicht werden, dass beispielsweise die Standby-Dauer erfasst wird, beispielsweise dadurch, dass ein Benutzer sich an jedem Wochentag eine bestimmte Anzahl von Getränken jeweils nur in einem bestimmten Zeitraum, zum Beispiel werktags, immer zwei Espressi, Samstags zwei Kaffee Crema und sonntags zwei Kaffee Crema und eine Stunde später noch einmal zwei Cappuccino, zubereiten lässt. Der erfindungsgemäße Getränkeautomat ist dabei in der Lage, ein derartiges Benutzungsmuster zu erkennen und die Standby-Zeit bzw. -Dauer entsprechend so anzupassen, dass die Auswerte-/Steuereinrichtung den Getränkeautomaten werktags und samstags unmittelbar nach zwei Getränkebezügen ausschaltet, sonntags aber erst nach der zweiten Getränkerunde. Hierdurch spart sich der Benutzer das manuelle Ausschalten bzw. an einem Sonntag das Wiedereinschalten, weil sich das Gerät für ihn zu früh ausgeschaltet hat. Hierdurch erfährt der Benutzer einen erheblichen Komfortgewinn und eine Zeitersparnis, da er weniger manuelle Einstellungen und Eingaben vornehmen muss. Durch eine adaptierte und optimierte Standby-Dauer ergibt sich auch eine Energieersparnis.

Darüber hinaus ist der erfindungsgemäße Getränkeautomat in der Lage, beispielsweise über seine Erfassungseinrichtung, einen Getränkebezug zu einer bestimmten Uhrzeit zu erfassen und dadurch eine zukünftige Getränkevorauswahl zu ermitteln und einzustellen. Zum Beispiel bezieht der Benutzer werktags oftmals einen Espresso in der Stärkeeinstellung "Normal" und anschließend einen Kaffee Crema in der Stärkeeinstellung "Sehr stark", so kann dies mittels der Erfassungseinrichtung erfasst und mittels der Auswerte-/Steuereinrichtung so ausgewertet werden, dass der Getränkeautomat sich entweder zu einer gewohnheitsmäßigen Getränkebezugszeit selbst einschaltet oder eingeschaltet wird und anschließend diese erfasste Getränkevorauswahl mit den zugehörigen Parametern, das heißt beim Espresso mit der Stärkeeinstellung "Normal" und beim Kaffee Crema "Sehr stark" auswählt. Hierdurch spart der Benutzer zwei Mal die Auswahl dieses Getränkes.

Insgesamt bietet der erfindungsgemäß Kaffeeautomat für den Benutzer den großen Vorteil, dass sich dieser in selbstlernender Weise an ein Benutzungsmuster des Benutzers anpasst, so dass weniger Interaktionen mit dem Getränkeautomaten erforderlich sind, was Zeit spart und die Zufriedenheit des Benutzers erhöht. Eine Bevormundung durch den Getränkeautomaten findet selbstverständlich nicht statt, da dieser die Auswerte-/Steuereinrichtung stets manuell übersteuern und beispielsweise ein anderes Getränk auswählen kann.

Zweckmäßig ist die Auswerte-/Steuereinrichtung derart ausgebildet, dass sie die erfassten Einschaltzeiten mittelt und daraus die zukünftige Einschaltzeit errechnet. Wird somit beispielsweise der Getränkeautomat werktags einmal um 8:00 Uhr, einmal um 7.55 Uhr und einmal um 8.05 Uhr eingeschaltet, so kann die Auswerte-/Steuereinrichtung hieraus ermitteln, dass die zukünftige Einschaltzeit 8:00 Uhr ist. Rein theoretisch ist alternativ auch vorstellbar, dass die Auswerte-/Steuereinrichtung derart ausgebildet ist, dass sie aus den erfassten Einschaltzeiten die früheste Einschaltzeit am Tag auswählt und als zukünftige Einschaltzeit festlegt. Beim vorherigen Beispiel würde dies bedeuten, dass nach einem gewissen Lernprozess die Auswerte-/Steuereinrichtung den Getränkeautomaten täglich bzw. werktags um 7.55 Uhr einschaltet. Hierdurch kann sichergestellt werden, dass der Getränkeautomat bereits eingeschaltet und betriebsbereit ist, wenn der Benutzer sich üblicherweise nähert.

Erfindungsgemäß ist die Auswerte-/Steuereinrichtung derart ausgebildet, dass sie die erfassten Ausschaltzeiten mittelt. Wird der erfindungsgemäße Getränkeautomat somit beispielsweise werktags einmal um 16:00 Uhr, einmal um 17:00 Uhr und einmal um 18:00 Uhr manuell ausgeschaltet, so kann die Auswerte-/Steuereinrichtung hieraus den Durchschnittswert, das heißt 17:00 Uhr, errechnen und als zukünftige Ausschaltzeit festlegen. Alternativ ist die Auswerte-/Steuereinrichtung erfindungsgemäß derart ausgebildet, dass sie aus den erfassten Ausschaltzeiten die späteste Ausschaltzeit auswählt und als zukünftige Ausschaltzeit festlegt, wodurch gewährleistet werden soll, dass der Getränkeautomat üblicherweise so lange betriebsbereit zur Verfügung steht, wie der Benutzer dies normalerweise entsprechend seinen Gewohnheiten fordert.

Zweckmäßig ist die Erfassungseinrichtung derart ausgebildet, dass sie eine Getränkeart, insbesondere Espresso, Cappuccino, und/oder Getränkeparameter, wie eine Getränkemenge, Mahlgradeinstellung, Kaffeemenge und/oder Kaffeestärke, erfasst und an die Auswerte-/Steuereinrichtung übermittelt. Wird somit beispielsweise von einem Benutzer ein Cappuccino mit einer erhöhten Kaffeemenge, einer erhöhten Milchmenge und einer vergleichsweise geringen Mahlfeinheit (Mahlgrad) gewählt, so kann die Erfassungseinrichtung dies erfassen und an die Auswerte-/Steuereinrichtung übermitteln, woraufhin diese bei einem erneuten Bezugswunsch für einen Cappuccino diese Parameter dem zukünftigen Getränkebezug zugrunde legt. Werden beispielsweise werktags morgens fünf Espressi zubereitet und nach dem Mittagessen acht Cappuccino, so kann die Auswerte-/Steuereinrichtung bestimmen, dass die zukünftige Getränkeauswahl ein Cappuccino ist. Ausgewählt wird also beispielsweise das zuletzt gewählte Getränk oder das am häufigsten gewählte Getränk. Ein selbstlernender Algorithmus sagt somit ein Benutzerverhalten voraus. Selbstverständlich ist dabei auch denkbar, dass sich die zukünftige Getränkevorauswahl an entsprechende Uhrzeiten anpasst bzw. ändert, so dass im vorliegenden Fall morgens als zukünftige Getränkevorauswahl ein Espresso eingestellt wird, während dies nach dem Mittagessen ein Cappuccino ist.

Zweckmäßig ist die Erfassungseinrichtung derart ausgebildet, dass sie den Bezug von Kaffeebohnen aus unterschiedlichen Bohnenbehältern erfasst und an die damit kommunizierend verbundene Auswerte-/Steuereinrichtung übermittelt. Letztere kann dabei derart ausgebildet sein, dass sie den von der Erfassungseinrichtung übermittelten Bohnenbehälter registriert und daraus den zukünftig auszuwählenden, insbesondere präferierten, Bohnenbehälter ermittelt und auswählt. Dabei ist selbstverständlich auch denkbar, dass benutzerdefinierte Getränkeprofile erstellt werden, so dass einem jeweiligen Benutzer, jeweils ausgewählte Getränke bzw. Getränkeparameter zugeordnet und einer zukünftigen Vorauswahl zugrunde gelegt werden. Auch könnte die Auswerte-/Steuereinrichtung derart ausgebildet sein, dass sie benutzerdefinierte Getränkeprofile anhand einer vordefinierten Reihenfolge vorauswählt, z.B. das Getränkeprofil "Tina" immer vor dem Getränkeprofil "Max".

Die vorliegende Erfindung beruht weiter auf dem allgemeinen Gedanken ein Verfahren zum Betreiben eines solchen Getränkeautomaten anzugeben, bei dem die Erfassungseinrichtung eine Uhrzeit eines Einschaltens, eines Ausschaltens, eines Standby-Betriebs des Getränkeautomaten, eine Uhrzeit eines Getränkebezugs, eine Art eines bezogenen Getränks und/oder Getränkeparameter erfasst und an eine damit kommunizierend verbundene Auswerte-/Steuereinrichtung übermittelt, die die von der Erfassungseinrichtung übermittelten Daten auswertet und daraus eine zukünftige Einschaltzeit, eine zukünftige Ausschaltzeit, eine zukünftige Standby-Zeit und/oder eine zukünftige Getränkevorauswahl und/oder zukünftige Getränkeparameter ermittelt und den Getränkeautomaten anhand der ermittelten zukünftigen Einschaltzeit, Ausschaltzeit, Standby-Zeit, einschaltet, ausschaltet, in Standby hält und/oder eine zukünftige Getränkevorauswahl und/oder zukünftige Getränkeparameter einstellt. Dies bietet eine enorme Komfortsteigerung, da mittels dem erfindungsgemäßen Verfahren nach einer gewissen Anzahl von regelmäßigen Bezügen und/oder regelmäßigen Bezugszeiten ein benutzerspezifisches Benutzungsmuster erkannt/erlernt werden kann und damit der Getränkeautomat beispielsweise kurz vor der normalen Einschaltzeit eingeschalten werden kann, bevor sich der Kunde bzw. Benutzer nähert.

Mit dem erfindungsgemäßen Verfahren kann auch dahingehend eine deutliche Komfortsteigerung erreicht werden, dass beispielsweise die Standby-Dauer erfasst wird, beispielsweise dadurch, dass ein Benutzer sich an jedem Wochentag eine bestimmte Anzahl von Getränken jeweils nur in einem bestimmten Zeitraum, zum Beispiel werktags, immer zwei Espressi, samstags zwei Kaffee Crema und sonntags zwei Kaffee Crema und eine Stunde später noch einmal zwei Cappuccino, zubereiten lässt. Das erfindungsgemäße Verfahren ist dabei in der Lage, ein derartiges Benutzungsmuster zu erkennen und die Standby-Zeit bzw. -Dauer entsprechend so anzupassen, dass die Auswerte-/Steuereinrichtung den Getränkeautomaten werktags und samstags unmittelbar nach zwei Getränkebezügen ausschaltet, sonntags aber erst nach der zweiten Getränkerunde. Hierdurch spart sich der Benutzer das manuelle Ausschalten bzw. an einem Sonntag das Wiedereinschalten, weil sich das Gerät für ihn zu früh ausgeschaltet hat. Hierdurch erfährt der Benutzer nicht nur eine Komfortsteigerung und eine Zeitersparnis, sondern durch eine adaptierte und optimierte Standby-Dauer auch eine Energieersparnis.

Bei einer vorteilhaften Weiterbildung des erfindungsgemäßen Verfahrens ist vorgesehen, dass die Auswerte-/Steuereinrichtung die erfassten Einschaltzeiten mittelt und daraus die zukünftige Einschaltzeit errechnet, oder dass sie aus den erfassten Einschaltzeiten die frühste Einschaltzeit am Tag auswählt und als zukünftige Einschaltzeit festlegt. Wird somit beispielsweise der Getränkeautomat werktags einmal um 8:00 Uhr, einmal um 7.55 Uhr und einmal um 8.05 Uhr eingeschaltet, so ermittelt die Auswerte-/Steuereinrichtung hieraus, dass die zukünftige Einschaltzeit 8:00 Uhr ist. Beim zweiten Beispiel würde dies bedeuten, dass nach einem gewissen Lernprozess die Auswerte-/Steuereinrichtung den Getränkeautomaten täglich bzw. werktags um 7.55 Uhr einschaltet. Hierdurch kann sichergestellt werden, dass der Getränkeautomat bereits eingeschaltet und betriebsbereit ist, wenn der Benutzer sich üblicherweise nähert.

Beim erfindungsgemäßen Verfahren mittelt die Auswerte-/Steuereinrichtung die erfassten Ausschaltzeiten. Wird der erfindungsgemäße Getränkeautomat somit beispielsweise werktags einmal um 16:00 Uhr, einmal um 17:00 Uhr und einmal um 18:00 Uhr manuell ausgeschaltet, so errechnet die Auswerte-/Steuereinrichtung hieraus den Durchschnittswert, das heißt 17:00 Uhr, und legt dies als zukünftige Ausschaltzeit fest. Alternativ wählt die Auswerte-/Steuereinrichtung erfindungsgemäß aus den erfassten Ausschaltzeiten die späteste Ausschaltzeit aus und legt diese als zukünftige Ausschaltzeit fest, wodurch gewährleistet werden soll, dass der Getränkeautomat üblicherweise so lange betriebsbereit zur Verfügung steht, wie der Benutzer dies normalerweise entsprechend seinen Gewohnheiten fordert.

## Patentansprüche

1. Getränkeautomat mit einer Erfassungseinrichtung, die eine Uhrzeit eines Einschaltens, eines Ausschaltens, eines Standby-betriebs des Getränkeautomaten, eine Uhrzeit eines Getränkebezugs, eine Art eines bezogenen Getränks und/oder Getränkeparameter erfasst und an eine damit kommunizierend verbundene Auswerte-/Steuereinrichtung übermittelt, die derart ausgebildet ist, dass sie die von der Erfassungseinrichtung übermittelte Daten auswertet und daraus eine zukünftige Einschaltzeit, eine zukünftige Ausschaltzeit, eine zukünftige Standby-Zeit, eine zukünftige Getränkevorauswahl und/oder Getränkeparameter ermittelt und den Getränkeautomaten anhand der ermittelten zukünftigen Einschaltzeit, Ausschaltzeit, Standby-Zeit, einschaltet, ausschaltet, in Standby hält und/oder eine zukünftige Getränkevorauswahl und/oder zukünftige Getränkeparameter einstellt, **dadurch gekennzeichnet, dass** die Auswerte-/Steuereinrichtung derart ausgebildet ist, dass sie die erfassten Ausschaltzeiten mittelt und daraus die zukünftige Ausschaltzeit ermittelt, oder dass sie aus den erfassten Ausschaltzeiten die späteste Ausschaltzeit auswählt und als zukünftige Ausschaltzeit festlegt.

2. Getränkeautomat nach Anspruch 1, **dadurch gekennzeichnet, dass** die Auswerte-/Steuereinrichtung derart ausgebildet ist, dass sie die erfassten Einschaltzeiten mittelt und daraus die zukünftige Einschaltzeit ermittelt, oder dass sie aus den erfassten Einschaltzeiten die frühste Einschaltzeit am Tag auswählt und als zukünftige Einschaltzeit festlegt.

3. Getränkeautomat nach einem der Ansprüche 1 bis 2, **dadurch gekennzeichnet, dass** die Erfassungseinrichtung derart ausgebildet ist, dass sie eine Getränkeart, insbesondere Espresso, Cappuccino, und/oder Getränkeparameter, wie eine Getränkemenge, Mahlgradeinstellung, Kaffeemenge und/oder Kaffeestärke, erfasst und an die Auswerte-/Steuereinrichtung übermittelt.

4. Getränkeautomat nach Anspruch 3, **dadurch gekennzeichnet, dass** die Auswerte-/Steuereinrichtung derart ausgebildet ist, dass sie das am häufigsten bezogene Getränk der zukünftigen Getränkevorauswahl zugrunde legt.

5. Getränkeautomat nach Anspruch 3, **dadurch gekennzeichnet, dass** die Auswerte-/Steuereinrichtung derart ausgebildet ist, dass sie das zu einer bestimmten Uhrzeit am häufigsten bezogene Getränk der zukünftigen Getränkevorauswahl zu dieser Uhrzeit zugrunde legt.

6. Verfahren zum Betreiben eines Getränkeautomaten nach einem der vorhergehenden Ansprüche, bei dem die Erfassungseinrichtung eine Uhrzeit eines Einschaltens, eines Ausschaltens, eines Standby-betriebs des Getränkeautomaten, eine Uhrzeit eines Getränkebezugs, eine Art eines bezogenen Getränks und/oder Getränkeparameter erfasst und an eine damit kommunizierend verbundene Auswerte-/Steuereinrichtung übermittelt, die die von der Erfassungseinrichtung übermittelte Daten auswertet und daraus eine zukünftige Einschaltzeit, eine zukünftige Ausschaltzeit, eine zukünftige Standby-Zeit, eine zukünftige Getränkevorauswahl und/oder Getränkeparameter ermittelt und den Getränkeautomaten anhand der ermittelten zukünftigen Einschaltzeit, Ausschaltzeit, Standby-Zeit, einschaltet, ausschaltet, in Standby hält und/oder eine zukünftige Getränkevorauswahl und/oder zukünftige Getränkeparameter einstellt, **dadurch gekennzeichnet, dass** die Auswerte-/Steuereinrichtung die erfassten Ausschaltzeiten mittelt und daraus die zukünftige Ausschaltzeit ermittelt, oder dass sie aus den erfassten Ausschaltzeiten die späteste Ausschaltzeit auswählt und als zukünftige Ausschaltzeit festlegt.

7. Verfahren nach Anspruch 6, **dadurch gekennzeichnet, dass** die Auswerte-/Steuereinrichtung die erfassten Einschaltzeiten mittelt und daraus die zukünftige Einschaltzeit ermittelt, oder dass sie aus den erfassten Einschaltzeiten die frühste Einschaltzeit am Tag auswählt und als zukünftige Einschaltzeit festlegt.

8. Verfahren nach einem der Ansprüche 6 bis 7, **dadurch gekennzeichnet, dass** die Erfassungseinrichtung eine Getränkeart, insbesondere Espresso, Cappuccino, und/oder Getränkeparameter, wie eine Getränkemenge, Mahlgradeinstellung, Kaffeemenge und/oder Kaffeestärke, erfasst und an die Auswerte-/Steuereinrichtung übermittelt, wobei die Auswerte-/Steuereinrichtung das am häufigsten bezogene Getränk der zukünftigen Getränkevorauswahl zugrunde legt oder wobei die Auswerte-/Steuereinrichtung das zu einer bestimmten Uhrzeit am häufigsten bezogene Getränk der zukünftigen Getränkevorauswahl zu dieser Uhrzeit zugrunde legt.

## Claims

1. Drinks machine with a detection facility, which detects a switch-on time, a switch-off time, a standby operation of the drinks machine, a time at which a drink is supplied, a type of drink supplied and/or drinks parameters and conveys this to an evaluation/control facility which is connected thereto in a communicating manner and which is configured such that it evaluates the data conveyed to it by the detection facility and determines therefrom a future switch-on time, a future switch-off time, a future standby time, a future drinks preselection and/or drinks parameters and on the basis of the determined future switch-on time, switch-off time and standby time, switches the drinks machine on, off, keeps it in standby mode and/or sets a future drinks preselection and/or future drinks parameter, **characterised in that** the evaluation/control facility is configured such that it takes the mean detected switch-off time and determines therefrom the future switch-off time, or that it selects the latest switch-off time from the detected switch-off times and defines this as the future switch-off time.

2. Drinks machine according to claim 1, **characterised in that** the evaluation/control facility is configured such that it takes the mean detected switch-on time and determines therefrom the future switch-on time, or that it selects the earliest switch-on time of the day from the detected switch-on times and defines this as the future switch-on time.

3. Drinks machine according to one of claims 1 to 2, **characterised in that** the detection facility is configured such that it detects a type of drink, in particular espresso, cappuccino, and or a drinks parameters, such as a volume of drink, coarseness setting, coffee amount and/or coffee strength and conveys this to the evaluation/control facility.

4. Drinks machine according to claim 3, **characterised in that** the evaluation/control facility is configured such that it uses the most frequently supplied drink as the basis for the future drinks preselection.

5. Drinks machine according to claim 3, **characterised in that** the evaluation/control facility is configured such that it uses the drink supplied most frequently at a particular time as the basis for the future drinks preselection at this time.

6. Method for operating a drinks machine according to one of the preceding claims, in which the detection facility detects a switch-on time, a switch-off time, a standby operation of the drinks machine, a time at which a drink is supplied, a type of drink supplied and/or drinks parameters and conveys this to an evaluation/control facility which is connected thereto in a communicating manner and which evaluates the data conveyed by the detection facility and determines therefrom a future switch-on time, a future switch-off time, a future standby time, a future drinks preselection and/or drinks parameters and switches the drinks machine on, off, keeps it in standby mode based on the determined future switch-on time, switch-off time, standby time, and/or sets a future drinks preselection and/or future drinks parameters, **characterised in that** the evaluation/control facility takes the mean detected switch-off time and determines therefrom the future switch-off time, or that it selects the latest switch-off time from the detected switch-off times and defines this as the future switch-off time.

7. Method according to claim 6, **characterised in that** the evaluation/control facility takes the mean detected switch-on time and determines therefrom the future switch-on time, or that it selects the earliest switch-on time of the day from the detected switch-on times and defines this as the future switch-on time.

8. Method according to one of claims 6 to 7, **characterised in that** the detection facility detects a type of drink, in particular espresso, cappuccino, and or drinks parameters, such as a volume of drink, coarseness setting, coffee amount and/or coffee strength and conveys this to the evaluation/control facility, wherein the evaluation/control facility uses the most frequently supplied drink as the basis for the future drinks preselection or wherein the evaluation/control facility uses the drink supplied most frequently at a particular time as the basis for the future drinks preselection at this time.

## Revendications

1. Distributeur automatique de boissons comprenant un dispositif d'enregistrement, qui enregistre une heure d'une mise en marche, d'une mise hors circuit, d'une mise en veille du distributeur automatique de boissons, une heure d'une perception de boisson, un type de boisson perçue et/ou un paramètre de boisson, et les transmet à un dispositif d'analyse / de commande relié en communication avec celui-ci, lequel est conçu de telle manière qu'il analyse les données transmises par le dispositif d'enregistrement et détermine à partir de celles-ci une heure de mise en marche future, une heure de mise hors circuit future, une heure de mise en veille future, une présélection de boisson future et/ou un paramètre de boisson futur, et met en marche, met hors circuit et met en veille le distributeur automatique de boissons sur la base de l'heure de mise en marche, l'heure de mise hors circuit et l'heure de mise en veille futures déterminées, et/ou règle une présélection de boisson future et/ou un paramètre de boisson futur,
**caractérisé en ce que** le dispositif d'analyse / de commande est conçu de telle manière qu'il établit la moyenne des heures de mise hors circuit enregistrées et détermine à partir de celle-ci l'heure de mise hors circuit future, ou qu'il sélectionne à partir des heures de mise hors circuit enregistrées l'heure de mise hors circuit la plus tardive et la définit en tant qu'heure de mise hors circuit future.

2. Distributeur automatique de boissons selon la revendication 1, **caractérisé en ce que** le dispositif d'analyse / de commande est conçu de telle manière qu'il établit la moyenne des heures de mise en marche enregistrées et détermine à partir de celle-ci l'heure de mise en marche future, ou qu'il sélectionne à partir des heures de mise en marche enregistrées la première heure de mise en marche dans la journée et la définit en tant qu'heure de mise en marche future.

3. Distributeur automatique de boissons selon l'une des revendications 1 ou 2, **caractérisé en ce que** le dispositif d'enregistrement est conçu de telle manière qu'il enregistre un type de boisson, en particulier l'espresso, le capuccino et/ou un paramètre de boisson, tel qu'une quantité de boisson, un réglage de la finesse de mouture, une quantité de café et/ou une intensité du café, et les transmet au dispositif d'analyse/ de commande.

4. Distributeur automatique de boissons selon la revendication 3, **caractérisé en ce que** le dispositif d'analyse/ de commande est conçu de telle manière qu'il prend pour base la boisson la plus fréquemment perçue de la présélection de boisson future.

5. Distributeur automatique de boissons selon la revendication 3, **caractérisé en ce que** le dispositif d'analyse/ de commande est conçu de telle manière qu'il prend pour base la boisson la plus fréquemment perçue à une heure déterminée de la présélection de boisson future à cette heure.

6. Procédé de fonctionnement d'un distributeur automatique de boissons selon l'une des revendications précédentes, dans lequel le dispositif d'enregistrement enregistre une heure d'une mise en marche, d'une mise hors circuit, d'une mise en veille du distributeur automatique de boissons, une heure d'une perception de boisson, un type de boisson perçue et/ou un paramètre de boisson et les transmet à un dispositif d'analyse/ de commande relié en communication à celui-ci, lequel analyse les données transmises par le dispositif d'enregistrement et détermine à partir de celles-ci une heure de mise en marche future, une heure de mise hors circuit future, une heure de mise en veille future, une présélection de boisson future et/ou un paramètre de boisson futur et met en marche, met hors circuit, met en veille le distributeur automatique de boissons sur la base de l'heure de mise en marche, l'heure de mise hors circuit et l'heure de mise en veille futures déterminées, et/ou règle une présélection de boisson future et/ou un paramètre de boisson futur,
**caractérisé en ce que** le dispositif d'analyse / de commande établit la moyenne des heures de mise hors circuit enregistrées et détermine à partir de celle-ci l'heure de mise hors circuit future, ou **en ce qu'**il sélectionne à partir des heures de mise hors circuit enregistrées l'heure de mise hors circuit la plus tardive et la définit en tant qu'heure de mise hors circuit future.

7. Procédé selon la revendication 6, **caractérisé en ce que** le dispositif d'analyse / de commande établit la moyenne des heures de mise en marche enregistrées et détermine à partir de celle-ci l'heure de mise en marche future, ou **en ce qu'**il sélectionne à partir des heures de mise en marche enregistrées la première heure de mise en marche dans la journée et la définit en tant qu'heure de mise en marche future.

8. Procédé selon l'une des revendications 6 à 7, **caractérisé en ce que** le dispositif d'enregistrement est conçu de telle manière qu'il enregistre un type de boisson, en particulier de l'espresso, du capuccino et/ou un paramètre de boisson, tel qu'une quantité de boisson, un réglage de la finesse de mouture, une quantité de café et/ou une intensité du café, et les transmet au dispositif d'analyse/ de commande, dans lequel le dispositif d'analyse/ de commande prend pour base la boisson la plus fréquemment perçue de la présélection de boisson future ou dans lequel le dispositif d'analyse / de commande prend pour base la boisson la plus fréquemment perçue à une heure déterminée de la présélection de boisson future à cette heure.
